# EUROPÄISCHE PATENTSCHRIFT

(11) **EP 2 662 257 B1**
(45) Veröffentlichungstag und Bekanntmachung des Hinweises auf die Patenterteilung: **02.01.2019**
(21) Anmeldenummer: 12167146.5
(22) Anmeldetag: 08.05.2012
(51) Int. Cl.: B61F 5/24, F16F 13/14, F16F 9/58

(54) **Schienenfahrzeug mit erhöhter Entgleisungssicherheit**
Rail vehicle with improved protection against derailing
Véhicule sur rails avec sécurité accrue contre le déraillement

(43) Veröffentlichungstag der Anmeldung: 13.11.2013
(73) Patentinhaber: Siemens AG Österreich, 1210 Wien (AT)
(72) Erfinder: Richter, Wolfgang-Dieter, 90610 Winkelhaid (DE)
(74) Vertreter: Maier, Daniel Oliver

(56) Entgegenhaltungen:
- DE-A1-102009 013 152
- JP-A- 2000 103 334
- JP-A- 2007 069 820
- KR-A- 20090 103 228
- US-A1- 2011 239 899

## Beschreibung

### Technisches Gebiet

Die Erfindung betrifft ein Schienenfahrzeug mit erhöhter Entgleisungssicherheit.

### Stand der Technik

Schienenfahrzeuge sind im Betrieb dem Risiko eines Zusammenstoßes ausgesetzt. Dieses Risiko ist bei Schienenfahrzeugen die nicht auf getrennten Gleiskörpern betrieben werden beträchtlich erhöht. Insbesondere Straßenbahnen erleiden häufig Unfälle mit PKW und LKW. Dabei kann es zum Entgleisen des Schienenfahrzeugs kommen, wodurch eine extreme Gefährdung von Verkehrsteilnehmern auftreten kann. Die Wahrscheinlichkeit des Entgleisens ist unter anderem vom Auftreffpunkt auf dem Schienenfahrzeug, der eingeleiteten Energie, dem Zustand der Gleisanlagen etc. abhängig. Überschreitet die eingeleitete Kraft die sogenannte Entgleisungsgrenzkraft, so entgleist das Fahrzeug. Kann die eingeleitete Energie in einem sogenannten Crashelement (eine spezielle Verformungszone mit Energieaufnahmekapazität) in Verformungsenergie umgewandelt werden, so kann die Entgleisungswahrscheinlichkeit deutlich verringert werden. Solche Crashelemente werden gemäß dem Stand der Technik an den Zugenden eingesetzt und wirken hauptsächlich bei Frontalzusammenstößen. An den Wagenseiten können Crashelemente nicht, zumindest jedoch nicht in ausreichender Dimension eingesetzt werden, da sie sonst in das Lichtraumprofil ragen würden oder zu großen Bauraum im Untergestell beanspruchen würden.

Aus dem Stand der Technik sind Fahrwerke bekannt, welche einen sogenannten Drehdämpfer umfassen, welcher einer Verdrehung der Fahrgestells in Bezug auf den Wagenkasten ein der Winkelgeschwindigkeit dieser Drehbewegung proportionales Gegendrehmoment entgegensetzt. In der Patentschrift JP 20001 103334A ist eine Einrichtung zur Verhinderung des Anstoßens des Fahrwerks an dem Wagenkasten angegeben, welche einen elektronisch verstellbaren Drehdämpfer umfasst. Dabei wird dieser Dämpfer mittels eines Steuergeräts in seinen Dämpfungseigenschaften in Abhängigkeit von seiner aktuellen Auslenkung verändert.

### Darstellung der Erfindung

Der Erfindung liegt daher die Aufgabe zugrunde, ein Schienenfahrzeug mit erhöhter Entgleisungssicherheit anzugeben, insbesondere für den Fall der impulsförmigen lateralen Krafteinwirkung.

Die Aufgabe wird durch ein Schienenfahrzeug mit den Merkmalen des Anspruchs 1 gelöst. Vorteilhafte Ausgestaltungen sind Gegenstand untergeordneter Ansprüche.

Dem Grundgedanken der Erfindung nach wird ein Schienenfahrzeug mit erhöhter Entgleisungssicherheit beschrieben, welches mindestens ein Fahrwerk umfasst und welches mit Drehdämpfern zwischen dem Drehgestell und dem Wagenkasten des Schienenfahrzeugs ausgestattet ist und wobei mindestens irreversibles Energieaufnahmeelement zwischen dem Fahrwerk und dem Wagenkasten angeordnet ist, welches bei lateraler Impulseinleitung in den Wagenkasten nach der vollständigen Auslenkung der Drehdämpfer in Wirkung tritt und zu dessen Verformung ein niedrigeres Kraftniveau als die Entgleisungsgrenzkraft des Schienenfahrzeugs erforderlich ist.

Dadurch ist der Vorteil erzielbar, die auf das Fahrgestell wirkende Querkraft niedriger als die Entgleisungsgrenzkraft halten zu können und solcherart ein Entgleisen verhindern zu können.

Erfindungsgemäß ist das Schienenfahrzeug mit Energieaufnahmeelementen ausgestattet, welche zwischen dem Wagenkasten und einem Fahrwerk (Drehgestell) angeordnet sind. Moderne Drehgestelle sind neben den gebräuchlichen Wagenkastenanbindungen auch mit Drehdämpfern ausgestattet, welche das für die Passagiere unangenehme Schlingern des Wagenkastens reduzieren. Diese Drehdämpfer sind sowohl mit dem Wagenkasten als auch mit dem Fahrwerk verbunden und nehmen die Energie der Relativbewegung zwischen Fahrwerk und Wagenkasten auf und wandeln diese in Wärmeenergie. Dabei kommen typischerweise hydraulische Prinzipien zur Anwendung, bei welchen eine Flüssigkeit mittels eines Kolbens durch eine Öffnung gepumpt wird und solcherart hydraulische Strömungsverluste auftreten.

Diese Drehdämpfer setzen einer Bewegung ihrer Kolbenstange eine Gegenkraft entgegen, sind in ruhendem Zustand jedoch kräftefrei, d.h. sie besitzen keine Rückstellkraft.

Bei einer lateralen Impulseinleitung in den Wagenkasten, beispielsweise aufgrund eines Zusammenstoßes mit einem anderen Fahrzeug geraten diese Drehdämpfer in eine Endlage, bzw. das Fahrgestell gerät in eine laterale, durch Queranschläge bestimmte Endlage worauf die auf das Fahrgestell wirkende Querkraft ansteigt. Überschreitet diese Querkraft die Entgleisungsquerkraft, so entgleist das Fahrzeug und der weitere Unfallverlauf ist nicht vorherbestimmbar.

Mittels gegenständlicher Erfindung gelingt es, die Entgleisungssicherheit eines Schienenfahrzeugs deutlich zu erhöhen. Erfindungsgemäß ist mindestens ein Energieaufnahmeelement vorgesehen, welches bei lateraler Impulseinwirkung einen Teil dieser Energie absorbiert, sodass die Entgleisungsgrenzkraft nicht, bzw. erst bei wesentlich höheren lateralen Aufprallenergien überschritten wird. Ein erfindungsgemäßes Schienenfahrzeug verbleibt somit in einer weitaus größeren Bandbreite an Unfallszenarien eingegleist.

Die laterale Impulseinleitung in den Wagenkasten erfolgt bei Straßenbahnen sehr häufig im Bereich der Fahrzeugfront, noch vor dem vordersten Drehgestell. Dies führt zu einer vollständigen Ausdrehung dieses Drehgestells gegenüber dem Wagenkasten und einem Überschreiten der Entgleisungsgrenzkraft an diesem Fahrwerk.

Erfindungsgemäß ist mindestens ein Energieaufnahmeelement je Fahrwerk bzw. Drehgestell vorgesehen, welches bei Überschreiten der maximalen Auslenkung, bzw. Ausdrehung dieses Drehgestells in Wirkung tritt und die laterale Impulsenergie umwandelt. Dieses Energieaufnahmeelement ist analog zu den sogenannten Crashelementen ausgebildet, wie sie an der Fahrzeugfront gebräuchlich sind. Das Energieaufnahmeelement weist einen bestimmten Energieaufnahmeweg auf, im Verlauf dessen ist das Kraftniveau im Wesentlichen konstant.

Es ist wesentlich, das zur Energieaufnahme erforderliche Kraftniveau des Energieaufnahmeelements niedriger als die Entgleisungsgrenzkraft des Schienenfahrzeugs auszulegen. Erst bei lateralen Impulsenergien, welche das Energieabsorptionsvermögen des Energieaufnahmeelements überschreiten, werden Kräfte in das Fahrwerk geleitet die zum Entgleisen führen können.

Das Energieaufnahmeelement kann einerseits als getrenntes, eigenständiges Bauteil ausgeführt sein, andererseits kann es als Funktionsbaugruppe in einen Drehdämpfer integriert sein.

Eine weitere Ausführungsform eines Energieaufnahmeelements besteht darin, die drehgestell- oder wagenkastenseitige Anbindung eines Drehdämpfers als energieverzehrende Konstruktion auszubilden. Dabei ist diese Anbindung so auszulegen, dass zur ihrer Verformung in der erwarteten Kraftrichtung ein bestimmtes, im Wesentlichen konstantes Kraftniveau erforderlich ist.

Die wesentliche vorteilhafte Eigenschaft der Erfindung ist es, dass ein Schienenfahrzeug bei einer weitaus größeren Vielfalt an Unfallszenarien d.h. auch bei weitaus höheren lateralen Impulsenergien eingegleist verbleibt.

Durch den Verformungsweg des Energieaufnahmeelements, welcher an den maximalen Weg der Drehdämpfer anschließt, kann es im Rahmen eines Unfallgeschehens zum Verlassen des Wagenkastens aus dem Lichtraumprofil kommen. Dies ist bei einem Unfall jedoch irrelevant und wesentlich ungefährlicher als ein Entgleisen des Fahrzeugs.

Als Energieaufnahmeelement können alle bekannten Methoden und Konstruktionen zur Umwandlung mechanischer Bewegungsenergie eingesetzt werden, welche ein über den Verformungsweg im Wesentlichen konstantes Energieniveau aufweisen. Insbesondere vorteilhaft sind irreversible Einrichtungen wie Aufweitrohre, Metallschäume, Faltträgerkonstrukionen, etc.

Gegenständliche Erfindung ist mit allen Ausführungsformen von Fahrwerken ausführbar, neben den gebräuchlichen zweiachsigen Drehgestellen können auch Einzelachsen mit den beschriebenen entgleisungshemmenden Eigenschaften versehen werden.

### Kurzbeschreibung der Zeichnungen

Es zeigen beispielhaft:
**Fig.1** Eine Drehgestellanbindung gemäß dem Stand der Technik.
**Fig.2** Eine Drehgestellanbindung mit Energieaufnahmeelementen.
**Fig.3** Eine Drehgestellanbindung mit eigenständigen Energieaufnahmeelementen.
**Fig.4** Kraft - Weg Kennlinie eines Energieaufnahmeelements.
**Fig.5** Ein Dämpfungs/Energieaufnahmeelement.
**Fig.6** Ein Dämpfungs/Energieaufnahmeelement - gestaucht.

### Ausführung der Erfindung

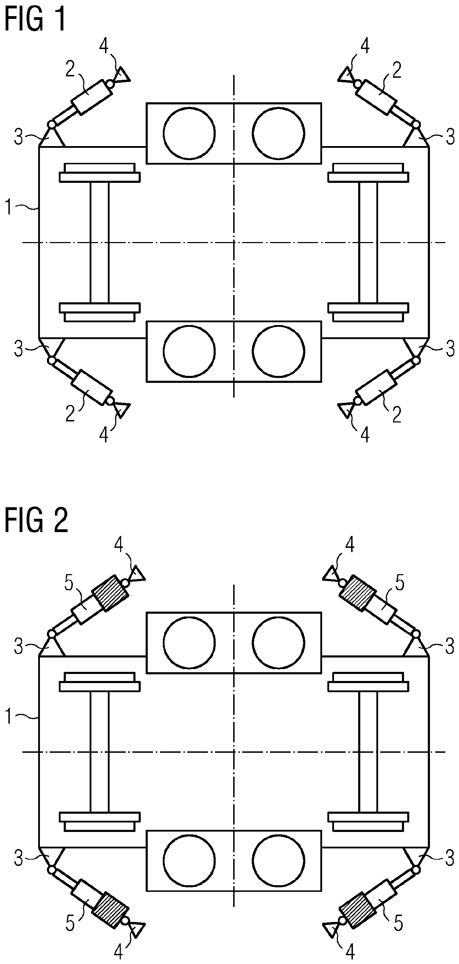

**Fig.1** zeigt beispielhaft und schematisch eine Drehgestellanbindung gemäß dem Stand der Technik. Es ist eine Aufsicht auf ein Fahrwerk 1 in eingebautem Zustand dargestellt. In dem gezeigten Ausführungsbeispiel ist das Fahrwerk 1 als zweiachsiges Drehgestell ausgeführt. Das Fahrwerk 1 weist zwei Achsen und eine Sekundärfederung auf. Weitere Verbindungsbauteile, wie Zugstangen, Endanschläge usw. sind zur Vereinfachung nicht dargestellt. Das Fahrwerk 1 ist mit vier drehgestellseitigen Drehdämpferanbindungen 3 ausgestattet, welche jeweils zur Aufnahme eines Drehdämpfers 2 ausgebildet sind. Der Wagenkasten, in Fig.1 nicht dargestellt, ist mit 4 wagenkastenseitigen Drehdämpferanbindungen 4 ausgestattet, mittels welcher die Drehdämpfer 2 mit dem Wagenkasten verbunden sind. Die Drehdämpfer 2 ermöglichen eine beschränkte Beweglichkeit des Fahrwerks 1 in Bezug zum Wagenkasten, stellen dieser Bewegung jedoch eine Gegenkraft entgegen, welche dieser Bewegungsgeschwindigkeit proportional ist. Im Fall eines Zusammenstoßes, insbesondere einer lateralen Impulseinleitung geraten die Drehdämpfer 2 in eine Endlage, bzw. erfolgt ein Anschlag des Fahrwerks 1 an Endanschlägen des Wagenkastens und die eingebrachte Energie bewirkt einen starken Anstieg der auf das Fahrwerk wirkenden Querkraft, wobei es beim Überschreiten der Entgleisungsgrenzkraft Fe zum Entgleisen des Fahrzeugs kommt.

**Fig.2** zeigt beispielhaft und schematisch eine Drehgestellanbindung mit Energieaufnahmeelementen. Es ist das Fahrzeug aus Fig.1 dargestellt, wobei die Drehdämpfer 2 durch Dämpfungs/Energieaufnahmeelemente 5 ersetzt sind. Diese Dämpfungs/Energieaufnahmeelemente 5 weisen einerseits dieselben Eigenschaften wie die Drehdämpfer 2 auf, andererseits sind sie mit energieaufnehmenden Eigenschaften ausgestattet, welche nach der maximalen Kompression des dämpfenden Teils in Wirkung treten. Die Dämpfungs/Energieaufnahmeelemente 5 dissipieren mechanische Energie in Bewegungsrichtung ihrer Kolbenstange nach dem Erreichen der maximalen Kompression durch mechanische Umformung. Dabei wird über den gesamten Verformungsweg ein möglichst konstantes Kraftniveau erzielt. Die Energieaufnahmekapazität eines Dämpfungs/Energieaufnahmeelements 5 bestimmt sich aus der Multiplikation dieses Kraftniveaus mit dem zur Verfügung stehenden Verformungsweg.

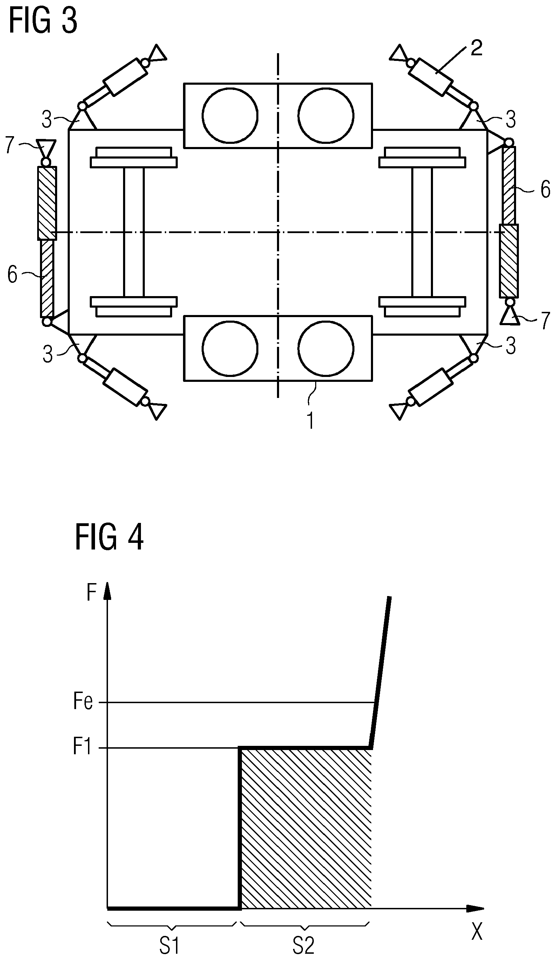

**Fig.3** zeigt beispielhaft und schematisch eine Drehgestellanbindung mit eigenständigen Energieaufnahmeelementen. Es ist ein weiteres Ausführungsbeispiel gegenständlicher Erfindung dargestellt, bei welchem die Funktion der Drehdämpfung getrennt von der Funktion der Energiedissipation angeordnet ist. Diese Funktion der Energiesissipation ist in zwei Energieaufnahmeelementen 6 realisiert, welche zwischen dem Fahrwerk 1 und dem Wagenkasten angeordnet sind. Die Energieaufnahmeelemente 6 sind jeweils mit wagenkastenseitigen Anbindungen 7 mit dem Wagenkasten verbunden. Zur Sicherstellung der Beweglichkeit des Fahrwerks 1 sind die Energieaufnahmeelemente 6 mit einem widerstandslosen Leerweg zu versehen, sodass die energieverzehrende Wirkung erst nach Überschreiten dieses Leerweges in Wirkung tritt.

**Fig.4** zeigt beispielhaft und schematisch eine Kraft - Weg Kennlinie eines Energieaufnahmeelements. Es ist der Zusammenhang zwischen dem Weg x der Auslenkung, bzw. der Kompression eines Energieaufnahmeelements 6 oder eines Dämpfungs/Energieaufnahmeelements 5 und der Kraft F dargestellt. Ausgehend von der Ruhelage erstreckt sich ein im Wesentlichen kraftfreier Dämpfungsweg S1, innerhalb dessen ein Energieaufnahmeelement 5, 6 jede beliebige Auslenkung einnehmen kann, ohne das dazu eine Kraft erforderlich ist. Allenfalls während der Bewegung stellt sich eine der Bewegungsgeschwindigkeit proportionale Gegenkraft ein. Bei einem Energieaufnahmeelement 6 ohne Dämpfungsfunktion entfällt auch diese Kraft und der Dämpfungsweg S1 ist bis auf geringe Reibungskräfte kraftlos. An den Dämpfungsweg S1 schließt ein Energieverzehrweg S2 an, in dessen Verlauf Bewegungsenergie gewandelt wird, d.h. in Verformungs- bzw. Wärmeenergie gewandelt wird. Während dieses Energieverzehrvorgangs wirkt ein Kraftniveau F1 auf das Energieaufnahmeelement 5, 6, welches konstruktiv möglichst konstant gestaltet ist. Wird der Energieverzehrweg S2 überschritten, so wirken weitere Bauteile einer Verformung entgegen und der Kraftverlauf steigt stark an. Es ist wesentlich, das Kraftniveau bei Energieverzehr F1 geringer als die Entgleisungsgrenzkraft Fe zu gestalten um ein Entgleisen zu verhindern. Die gesamte, in einem Energieaufnahmelement 5, 6 umwandelbare mechanische Energie entspricht der in Fig. 4 strichliert dargestellten Fläche im Bereich des Energieverzehrwegs S2.

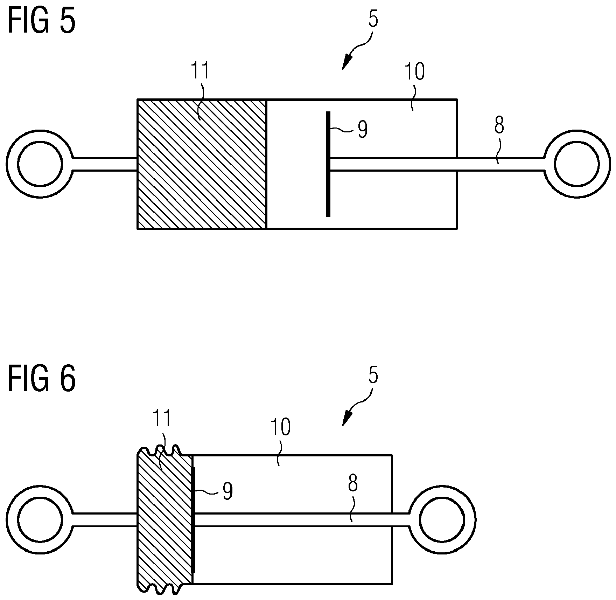

**Fig.5** zeigt beispielhaft und schematisch ein Dämpfungs/Energieaufnahmeelement. Es ist eine Schnittdarstellung in Längsrichtung durch ein Dämpfungs/Energieaufnahmeelement 5 gezeigt. Dieses umfasst eine Kolbenstange 8, an deren einem Ende ein Kolben 9 angeordnet ist, welcher in einem Hohlraum 10 des Dämpfungs/Energieaufnahmeelement 5 schiebbar gelagert ist. Dieses Konstruktionsprinzip ist als Stoßdämpfer bekannt, der Hohlraum 10 ist meist mit einer Flüssigkeit gefüllt, der Kolben 9 weist meist Bohrungen bzw. Ausnehmungen auf, sodass die Flüssigkeit zwischen den durch den Kolben 9 getrennten Teilen des Hohlraums 10 strömen kann. Solcherart wird die Bewegung des Kolbens 9 gebremst. Weiters weist das Dämpfungs/Energieaufnahmeelement 5 einen Bereich auf, welcher mit energieaufnehmendem Material 11 gefüllt ist, bzw. aus solchem Material besteht. Dazu eignen sich beispielsweise Metall- oder Kunststoffschäume. Fig. 5 stellt das Dämpfungs/Energieaufnahmeelement 5 in einer Arbeitsposition dar.

**Fig.6** zeigt beispielhaft und schematisch ein Dämpfungs/Energieaufnahmeelement in gestauchtem Zustand. Es ist das Dämpfungs/Energieaufnahmeelement 5 aus Fig 5 gezeigt, nachdem es mechanische Energie absorbiert hat. Die Kolbenstange 8 und somit der Kolben 9 sind vollständig in das Dämpfungs/Energieaufnahmeelement 5 eingefahren. Der Kolben 9 ist mit dem Bereich aus energieaufnehmendem Material 11 kollidiert und hat dieses energieaufnehmende Material 11 komprimiert.

### Liste der Bezeichnungen

- 1: Fahrwerk
- 2: Drehdämpfer
- 3: Drehdämpferanbindung drehgestellseitig
- 4: Drehdämpferanbindung wagenkastenseitig
- 5: Dämpfungs/Energieaufnahmeelement
- 6: Energieaufnahmeelement
- 7: Energieaufnahmeelementanbindung wagenkastenseitig
- 8: Kolbenstange
- 9: Kolben
- 10: Hohlraum
- 11: Energieaufnehmendes Material
- F: Kraft
- F1: Kraftniveau bei Energieverzehr
- Fe: Entgleisungsgrenzkraft
- S1: Dämpfungsweg
- S2: Energieverzehrweg
- x: Auslenkung

## Patentansprüche

1. Schienenfahrzeug mit erhöhter Entgleisungssicherheit, umfassend mindestens ein Fahrwerk (1), wobei Drehdämpfer (2) zwischen dem Fahrwerk (1) und dem Wagenkasten des Schienenfahrzeugs angeordnet sind, **dadurch gekennzeichnet, dass** mindestens ein irreversibles Energieaufnahmeelement (5, 6) zwischen dem Fahrwerk (1) und dem Wagenkasten angeordnet ist, welches bei lateraler Impulseinleitung in den Wagenkasten nach der vollständigen Auslenkung der Drehdämpfer (2) in Wirkung tritt und zu dessen Verformung ein niedrigeres Kraftniveau (F1) als die Entgleisungsgrenzkraft (Fe) des Schienenfahrzeugs erforderlich ist.

2. Schienenfahrzeug mit erhöhter Entgleisungssicherheit nach Anspruch 1, **dadurch gekennzeichnet, dass** das Energieaufnahmeelement (5) als Teil eines Drehdämpfers (2) ausgeführt ist.

3. Schienenfahrzeug mit erhöhter Entgleisungssicherheit nach Anspruch 1, **dadurch gekennzeichnet, dass** das Energieaufnahmeelement (6) als eigenständiges Bauteil ausgeführt ist.

4. Schienenfahrzeug mit erhöhter Entgleisungssicherheit nach Anspruch 1, **dadurch gekennzeichnet, dass** eine Anbindung (2, 3) eines Drehdämpfers (2) als Energieaufnahmeelement ausgeführt ist.

5. Schienenfahrzeug mit erhöhter Entgleisungssicherheit nach einem der Ansprüche 1 bis 4, **dadurch gekennzeichnet, dass** das Fahrwerk (1) als zweiachsiges Drehgestell ausgeführt ist.

## Claims

1. Rail vehicle with improved protection against derailing, comprising at least one chassis frame (1), wherein rotational dampers (2) are arranged between the chassis frame (1) and the carriage body of the rail vehicle, **characterised in that** at least one irreversible energy absorption element (5, 6) is arranged between the chassis frame (1) and the carriage body, which comes into effect when lateral momentum is introduced into the carriage body after the complete displacement of the rotational dampers (2) and a lower level of force (F1) is required for the deformation thereof than the derailing limit force (Fe) of the rail vehicle.

2. Rail vehicle with improved protection against derailing according to claim 1, **characterised in that** the energy absorption element (5) is designed as part of a rotational damper (2).

3. Rail vehicle with improved protection against derailing according to claim 1, **characterised in that** the energy absorption element (6) is designed as a discrete component.

4. Rail vehicle with improved protection against derailing according to claim 1, **characterised in that** a linkage (2, 3) of a rotational damper (2) is designed as an energy absorption element.

5. Rail vehicle with improved protection against derailing according to one of claims 1 to 4, **characterised in that** the chassis frame (1) is designed as a two-axled bogie.

## Revendications

1. Véhicule sur rails à sécurité accrue contre le déraillement, comprenant au moins un mécanisme de roulement (1), dans lequel des amortisseurs rotatifs (2) sont situés entre le mécanisme de roulement (1) et la superstructure du véhicule sur rails, **caractérisé en ce qu'**au moins un élément d'absorption irréversible d'énergie (5, 6) est situé entre le mécanisme de roulement (1) et la superstructure, lequel élément entre en action après la déviation complète des amortisseurs rotatifs (2) en cas d'application d'une impulsion latérale dans la superstructure et dont la déformation nécessite un niveau de force (F1) plus faible que la force limite de déraillement (Fe) du véhicule sur rails.

2. Véhicule sur rails à sécurité accrue contre le déraillement selon la revendication 1, **caractérisé en ce que** l'élément d'absorption d'énergie (5) est exécuté en tant que partie d'un amortisseur rotatif (2).

3. Véhicule sur rails à sécurité accrue contre le déraillement selon la revendication 1, **caractérisé en ce que** l'élément d'absorption d'énergie (6) est exécuté en tant qu'élément de construction autonome.

4. Véhicule sur rails à sécurité accrue contre le déraillement selon la revendication 1, **caractérisé en ce qu'**une liaison (2, 3) d'un amortisseur rotatif (2) est exécutée en tant qu'élément d'absorption d'énergie.

5. Véhicule sur rails à sécurité accrue contre le déraillement selon l'une des revendications 1 à 4, **caractérisé en ce que** le mécanisme de roulement (1) est exécuté en tant que bogie à deux essieux.
